# EUROPEAN PATENT SPECIFICATION

(11) **EP 1 679 948 B1**
(45) Date of publication and mention of the grant of the patent: **16.01.2008**
(21) Application number: 04768329.7
(22) Date of filing: 02.09.2004
(51) Int. Cl.: A01D 17/10

(54) **WEB COVERS FOR CONVEYOR SCREENS**
BAHNABDECKUNGEN FÜR FÖRDERSIEBE
GARNITURES POUR TAPIS TRANSPORTEURS

(30) Priority: 03.09.2003 GB 0320567
(43) Date of publication of application: 19.07.2006
(73) Proprietor: Rankin, David, Bangor BT19 7QT, County Down (GB); Shanks, Anne, Bangor BT19 7QT, County Down (GB)
(72) Inventor: Rankin, David, Bangor BT19 7QT, County Down (GB); Shanks, Anne, Bangor BT19 7QT, County Down (GB)
(74) Representative: McCarthy, Denis Alexis
(86) International application number: PCT/GB2004/003782
(87) International publication number: WO 2005/022977

(56) References cited:
- EP-A- 0 336 075
- DE-A- 1 757 617
- DE-B- 1 189 774

## Description

This invention relates to a web cover for an endless conveyor used primarily, but not necessarily for harvesting potatoes or other root vegetables (hereinafter referred to as "root crops"), whose screen is formed by a parallel rod conveyor, or series of conveyors and generally called a "web" (see e.g. EP-A-0 336 075).

A parallel rod conveyor or web consists of a plurality of rods attached to side belts. The web carries the root crop through a machine to a collection point while soil and other debris falls through the spacings between the rods. To aid separation of soil and debris from the root crop, the web is oscillated by the use of asymmetric rollers which act on the side belting causing it to vibrate. The root crop is carried over a series of webs and other types of soil separation mechanisms until it reaches the collection point. One of the problems with this method of soil separation is that damage to the root crop occurs by repeated contact with the web as it is conveyed through the machine. As the root crop is carried along through the machine more soil is removed and the risk of damaging the root crop increases.

There is another problem with conventional webs in that they are not ideally suited for carrying some types of root crops, such as carrots and parsnips. Because the rods are secured at right angles to the direction of travel of the web, the spacing between the rods allows carrots and similarly shaped root crops to fall partly though the rods as there is inadequate support. The carrots or parsnips are then often damaged or broken in half on contact with the rollers on the machine because they are not supported sufficiently by the web. This damage is unacceptable and the existing conveyor screen disadvantageous.

An object of the present invention is to obviate or mitigate this disadvantage.

Accordingly, the present invention is a web cover for an endless conveyor, the cover being formed from a continuous belt of wear-resistant, non-metallic sheet material in which a plurality of closely spaced holes are provided, the web cover being endless and intended to overlie the screen of said conveyor.

Preferably, the web cover is formed with the ends of the belt being joined together by fastening means. The fastening means beneficially comprises two parts, both parts having reflexive sections and having two limbs with one part being secured to each end of the belt with a limb above and below the said end of the belt. One part is desirably provided with a lengthwise series of spaced hook elements and the other part being provided with a correspondingly spaced lengthwise series of apertures through which extends and is secured a rod around which each hook element is engagable and is held. The elongate belt is preferably loosely arranged around the screen which itself is arranged around a set of three or more parallel rollers, at least one of which is adapted to be driven, the root crop to be screened being fed onto the upper flight of the cover. Movement means may be provided to vibrate at least the upper flight of the screen.

Preferably also, the holes in the or each belt are similar and are provided in a regular pattern across and in particular to providing bridges of material between and at substantially right angles to adjacent parallel rods.

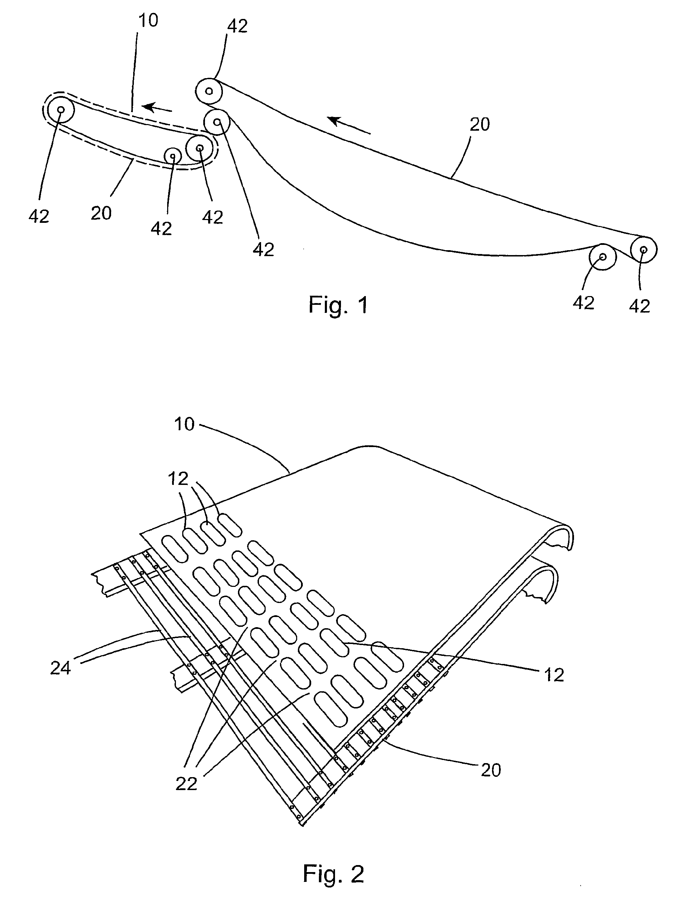

An embodiment of the present invention will now be described, by way of example, with reference to the accompanying drawings, in which:-
Fig. 1 is a side view of a screen according to the present invention, showing two conveyors with a web cover over a second conveyor;
Fig. 2 is a perspective view of the web cover over the conveyor with some holes being shown; and
Fig. 3 is a perspective view of a part of the web cover showing fastening means, apertures in the cover not being shown.

Referring to the drawings, a web cover for a conveyor is formed from one continuous belt 10 of wear-resistant non-metallic sheet material. The belt 10 has a plurality of similar holes 12 spaced in a regular pattern thereacross. The holes 12 are substantially square, hexagonal or round. Square holes have typically a 10mm radius on each corner. The belt 10 is formed of a multi-layered material, the topmost layer being a soft rubber or synthetic compound. The top covering is made of a high quality super-soft rubber compound which has the advantage of reducing damage and bruising on the root crop being harvested to a minimum. As an item of the root crop falls onto the belt 10 it will be cushioned by the top covering and so will incur little or no damage as it hits or moves across the belt. The top layer is made of a high-grade natural rubber compound which is cured to give a soft texture but which still has excellent resistance to abrasion. The softness of the rubber is dependent upon variations in temperature pressure and time taken during the curing process. This top covering is bonded to the other layers of the belt producing a very soft surface. This material combines the strength and wear resistance of a heavy duty rubber conveyor with the disadvantages of a hard wearing but highly shock absorbent, cushioned surface.

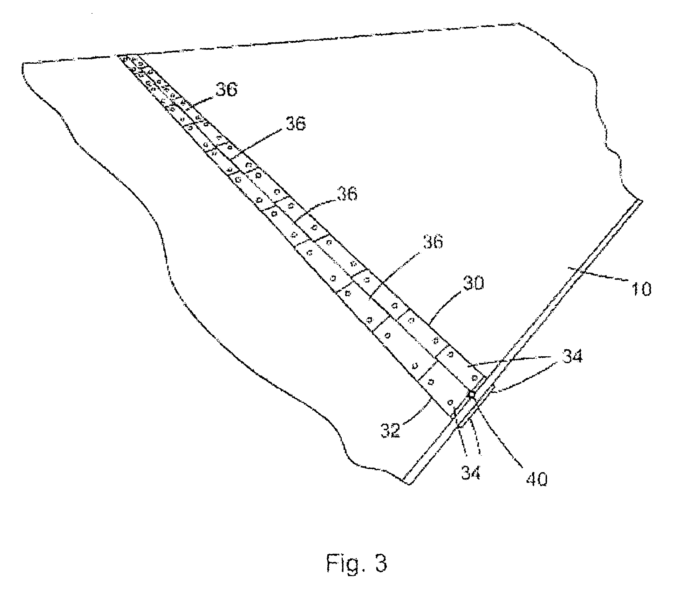

One elongate belt 10 is formed into a continuous belt with its ends joined together by fastening means. The fastening means (Fig. 3) comprises two parts 30, 32. Both parts 30, 32 have reflexive sections, each having two limbs 34 with one part 30 being secured to each end of the belt 10 with a limb 34 above and one below the said end of the belt 10. The parts are of metal or hard-wearing plastics material. The two limbs 34 of each part 30, 32 are secured together trapping the respective end of the belt 10. One part 30 is provided with a lengthwise series of spaced hook elements 36 and the other part 32 is provided with a correspondingly spaced lengthwise series of apertures 38 through which extends and is secured a hinge rod 40 around which each hook element 36 is engagable and is held. The elongate belt 10 overlies a conveyor screen 20 arranged around a set of three or more rollers 42 as shown, at least one of which is adapted to be driven. The items to be screened are fed onto the upper flight of the belt 10. Movement means in the form of power driven agitators are provided on the conveyor to vibrate at least the upper flight of the screen 20 and therefore the belt 10. The belt 10 is loosely arranged around the conveyor 20 or can be taut and movable with the conveyor screen 20. In either case, the web cover travels around and in the same direction as the conveyor screen. The lands 22 between the holes 12 in each row of the web cover provides bridging at right angles to the rods 24 and prevents passage of root crops through the holes. The two-part fastener described above had been designed to be changed with the minimum of delay. It is advantageous to reduce the time taken for changing web covers on the conveyor screens.

In use, with a web cover fitted over a conveyor screen, root crops are harvested. As described above, by the movement imparted through friction to the belt 10, the root crops migrate across the belt 10 with passage through the holes 12 of any soil and debris.

An advantage of having a web cover is that it is readily changed rather than the conveyor screen. If smaller holes or larger holes are required, i.e. a series of web covers can be provided to be used one at a time, each web cover having different sizes of holes. In this way, the requirement to change a conveyor screen with smaller or larger spacings between the rods and consequently different sprockets, is removed.

The belt may be formed in two or more parts, adjacent ends being connected together with fastening means as above described.

Variations and modifications can be made without departing from the scope of the invention described above and as claimed hereinafter.

## Claims

1. A web cover for an endless conveyor (20), the cover being formed from a continuous belt (10) of wear-resistant, non-metallic sheet material in which a plurality of closely spaced holes (12) are provided, the web cover being endless and intended to overlie the screen of said conveyor.

2. A web cover as claimed in Claim 1, wherein the web cover is formed with the ends of the belt (10) being joined together by fastening means.

3. A web cover as claimed in Claim 2, wherein the fastening means comprises two parts (30, 32), both parts having reflexive sections and having two limbs (34) with one part being secured to each end of the belt with a limb above and below the said end of the belt.

4. A web cover as claimed in Claim 3, wherein one part is provided with a lengthwise series of spaced hook elements (36) and the other part being provided with a correspondingly spaced lengthwise series of apertures (38) through which extends and is secured a rod (40) around which each hook element is engagable and is held.

5. A web cover as claimed in Claim 4, wherein the elongate belt (10) is for loosely arranging around the screen which itself is arranged around a set of three or more parallel rollers (42), at least one of which is adapted to be driven, the root crop to be screened being fed onto the upper flight of the cover.

6. A web cover as claimed in Claims 4 or 5, wherein the holes (12) in the or each sheet are similar and are provided in a regular pattern across and in particular to providing bridges of material between and at substantially right angles to adjacent parallel rods (24).

7. An endless conveyor having a web cover as claimed in any one of the preceding claims, in which the cover is loosely arranged around the screen.

8. A conveyor as claimed in Claim 7, wherein movement means is provided to vibrate at least the upper flight of the screen and therefore the cover.

## Patentansprüche

1. Eine Netzabdeckung für einen Endlosförderer, die Abdeckung wird aus einem fortlaufenden Band an verschleissfestem, nicht-metallischem Material in welchem eine Vielzahl an dicht beieinanderliegenden Löchern vorhanden ist, gebildet. Die Netzabdeckung ist endlos und soll über dem Sieb des besagten Förderers liegen.

2. Eine Netzabdeckung wie in Anspruch 1 angegeben, bei der die Enden des Bandes durch eine Verschlusstechnik zusammengehalten werden.

3. Eine Netzabdeckung wie in Anspruch 2 angegeben, bei der die Verschlusstechnik aus zwei Teilen besteht, beide Teile haben reflexive Abschnitte und sie haben zwei Glieder, ein Teil wird an einem Ende des Bandes befestigt mit einem Glied drüber und unter dem besagten Ende des Bandes.

4. Eine Netzabdeckung wie in Anspruch 3 angegeben, bei der ein Teil mit einer längsseitigen Serie an Hakenelementen bereitgestellt wird und der andere Teil mit einer längsseitigen Serie von entsprechend angeordneten Öffnungen, durch welche eine Rute gesteckt wird, die von jedem Hakenelement gehalten und gesichert wird.

5. Eine Netzabdeckung wie in Anspruch 4 angegeben, bei der das längliche Band locker um das Sieb, welches wiederum um drei oder mehr parallele Rollen herum eingerichtet ist, arrangiert werden soll. Mindestens eine der Rollen ist dazu geeignet, angetrieben zu werden, die Wurzelfrüchte, die gesiebt werden sollen, werden auf die obere Seite der Abdeckung geleitet.

6. Eine Netzabdeckung wie in den Ansprüchen 4 und 5 angegeben, bei der die Löcher in der oder jedem Band gleich sind und in einem gleichmässigen Muster verteilt und besonders Brücken im Material bereitstellen zwischen und an rechten Winkeln mit anliegenden parallelen Ruten.

7. Ein Endlosförderer mit einer Netzabdeckung wie in jedem der vorangehenden Ansprüche beschrieben, bei dem die Abdeckung locker um das Sieb herum arrangiert wird.

8. Ein Förderer wie in Anspruch 7 angegeben, bei dem Bewegungsart vorhanden ist um zumindest das obere Band des Siebes und somit die Abdeckung vibrieren zu lassen.

## Revendications

1. Une toile de recouvrement pour un transporteur sans fin (20), la toile étant formée en une courroie continue (10) en matière tissée non-métallique et résistante à l'usure dans laquelle se trouve une pluralité de trous (12) à espacement serré, la toile de recouvrement étant sans fin et destinée à recouvrir le tamis dudit transporteur.

2. Une toile de recouvrement comme dans la Revendication 1, selon laquelle la toile de recouvrement est formée avec les extremités de la courroie (10) étant reliées ensemble à l'aide d'un moyen de fermeture.

3. Une toile de recouvrement comme dans la Revendication 2, selon laquelle le moyen de fermeture se compose de deux parties (30, 32), les deux parties ayant des sections reflexives et ayant deux branches (34) avec une partie étant accrochée à chacune des extrémités de la courroie et une branche au-dessus et au-dessous de ladite extrémité de la courroie.

4. Une toile de recouvrement comme dans la Revendication 3, selon laquelle une partie est fournie avec une série en longueur d'éléments de crochets espacés régulièrement (36) et l'autre partie étant fournie avec une série en longueur correspondante d'ouvertures (38) au travers desquelles s'étend une tige fermement fixée (40) autour de laquelle chaque élément de crochet est engagé et maintenu.

5. Une toile de recouvrement comme dans la Revendication 4, selon laquelle la courroie(10) étirée est placée librement autour du tamis qui lui même est placé autour d'un jeu de trois (ou plus) rouleaux parallèles (42), avec au moins un de ceux-ci étant prévu pour être entraîné, les plantes à tubercules comestibles devant être tamisées étant alimentées par la partie supérieure de la toile.

6. Une toile de recouvrement comme dans la Revendication 4 ou 5, selon laquelle les trous (12) dans la ou chaque toile sont identiques et se trouvent espacés régulièrement sur toute la surface et en particulier dans le but de former des ponts de matériau principalement à angles droits entre les tiges parallèles adjacentes (24).

7. Un transporteur sans fin ayant une toile de recouvrement comme revendiqué dans l'une ou l'autre des revendications précédentes, selon laquelle la toile est placée librement autour du tamis.

8. Un transporteur comme dans la Revendication 7, selon laquelle un mouvement est prévu pour faire vibrer au moins la partie supérieure du tamis, et donc de la toile.
